# EUROPEAN PATENT APPLICATION

(11) **EP 1 445 285 A1**
(43) Date of publication of application: **11.08.2004**
(21) Application number: 02801500.6
(22) Date of filing: 08.10.2002
(51) Int. Cl.: C08L 101/00, C08L 51/04, C08L 27/06

(54) **THERMOPLASTIC RESIN COMPOSITION WITH EXCELLENT IMPACT RESISTANCE**

(30) Priority: 12.10.2001 JP 2001315771
(71) Applicant: KANEKA CORPORATION, Osaka-shi, Osaka 530-8288 (JP)
(72) Inventor: TAKAKI, Akira, Nada-ku, Kobe-shi, Hyogo 657-0025 (JP); SATO, Akio, Nagata-ku, Kobe-shi, Hyogo 653-0038 (JP); MIZUTA, Tosio, Takasago-shi, Hyogo 676-0011 (JP); MIYATAKE, Nobuo, Akashi-shi, Hyogo 674-0071 (JP); YUI, Koji, Nishi-ku, Kobe-shi, Hyogo 651-2113 (JP)
(74) Representative: VOSSIUS & PARTNER
(86) International application number: PCT/JP2002/010429
(87) International publication number: WO 2003/033595

(57) **Abstract**

A thermoplastic resin composition having excellent impact resistance, comprising (A) 1 to 30 parts by weight of a graft copolymer obtained by polymerizing 70 to 5 parts by weight of a monomer component comprising 50 to 100 % by weight of methyl methacrylate and 50 to 0 % by weight of other vinyl monomer copolymerizable therewith in single or multi stage in the presence of 30 to 95 parts by weight (solid basis) of a latex of a butadiene rubber, wherein the graft polymerization is carried out while agglomerating the particles by using a water-soluble electrolyte to enhance the particle size to achieve a b/a ratio of at least 2.9 wherein "a" is the average particle size of the butadiene rubber and "b" is the average particle size of the graft copolymer, and (B) 99 to 70 parts by weight of a thermoplastic resin.

## Description

### TECHNICAL FIELD

The present invention relates to a thermoplastic resin composition having an excellent impact resistance.

### BACKGROUND ART

Various proposals have hitherto been made in order to improve the impact resistance of thermoplastic resins. For example, in case of vinyl chloride resins which are representative thermoplastic resins, so-called MBS resins prepared by graft-copolymerizing methyl methacrylate, styrene and the like onto a butadiene rubber have been used as an impact modifier. It is known that the impact resistance-imparting effect of the MBS resins is further enhanced by increasing the particle size of butadiene rubber and, therefore, various techniques for increasing the particle size have been proposed. The particle size-increasing technique is disclosed, for instance, in JP-A-42-22541, JP-A-47-49191 and JP-A-4-170458. Most of known particle size-increasing techniques are addressed to agglomerating agents used for increasing the particle size and methods of polymerization using agglomerating agents. Demand for improving the impact resistance in this field is still strong, and further improvement of MBS resins has been desired.

An object of the present invention is to provide an impact modifier capable of drastically improving the impact resistance of thermoplastic resins such as vinyl chloride resins.

A further object of the present invention is to provide a thermoplastic resin composition having a drastically improved impact resistance.

Another object of the present invention is to provide a process for preparing a butadiene rubber-containing graft copolymer having a drastically improved impact resistance-imparting effect.

### DISCLOSURE OF INVENTION

The present inventors have found that when graft copolymers are prepared by polymerizing a monomer component comprising 50 to 100 % by weight of methyl methacrylate and 50 to 0 % by weight of other vinyl monomer copolymerizable therewith in single or multi stage in the presence of a latex of a butadiene rubber in such a manner as agglomerating the polymer particles in the polymerization system by means of an agglomerating agent to enhance the particle size so that the average particle size of the obtained graft copolymer particles in the resulting latex is at least 2.9 times the average particle size of the rubber particle in the butadiene rubber latex, the impact resistance-imparting effect of butadiene rubber-containing graft copolymers can be drastically improved as compared with known graft copolymers having the same average particle size.

Thus, the present invention provides a thermoplastic resin composition comprising (A) 1 to 30 parts by weight of a graft copolymer obtained by polymerizing 70 to 5 parts by weight of a monomer component comprising 50 to 100 % by weight of methyl methacrylate and 50 to 0 % by weight of other vinyl monomer copolymerizable therewith in the presence of 30 to 95 parts by weight (solid basis) of a latex of a butadiene rubber, wherein the polymer particles in the polymerization system are agglomerated by using a water-soluble electrolyte to enhance the particle size so that the b/a ratio of the average particle size "b" of the graft copolymer to the average particle size "a" of the butadiene rubber latex is at least 2.9, and (B) 99 to 70 parts by weight of a thermoplastic resin, the total of (A) and (B) being 100 parts by weight.

The present invention further provides a process for preparing graft copolymers having a markedly improved impact resistance-imparting effect, comprising the steps of producing a latex of a butadiene rubber, and emulsion-polymerizing 70 to 5 parts by weight of a monomer component comprising 50 to 100 % by weight of methyl methacrylate and 50 to 0 % by weight of other vinyl monomer copolymerizable therewith in the presence of a water-soluble electrolyte and 30 to 95 parts by weight (solid basis) of the latex of a butadiene rubber to give a graft copolymer having an average particle size of at least 2.9 times the average particle size of the butadiene rubber latex used, wherein the total of the monomer component and the butadiene rubber is 100 parts by weight.

The graft copolymer according to the present invention is suitable for various thermoplastic resins, particularly vinyl chloride resins containing at least 50 % by weight of vinyl chloride.

It is preferable that the butadiene rubber latex used in the graft polymerization has an average particle size "a" of not more than 0.065 µm (not more than 65 nm), especially not more than 0.060 µm, more especially not more than 0.055 µm, and the particle size is enhanced during the graft polymerization to achieve a b/a ratio of at least 3.5, especially at least 4.

Further, it is preferable that the average particle size of the graft copolymer in the latex obtained by the graft polymerization is not less than 0.1 µm (not less than 100 nm), especially not less than 0.12 µm.

### BEST MODE FOR CARRYING OUT THE INVENTION

The butadiene rubber used in the present invention is composed of 60 to 100 % by weight of butadiene, 40 to 0 % by weight of a vinyl monomer copolymerizble with butadiene, and 0 to 5 % by weight of a crosslinking monomer. The latex of this rubber can be prepared by a known emulsion polymerization method. The average particle size of the rubber latex is controlled by the amounts of emulsifier and polymerization initiator used. The average particle size of the rubber latex is from 0.08 to 0.04 µm, especially from 0.07 to 0.05 µm.

Examples of the vinyl monomer copolymerizable with butadiene are, for instance, an aromatic compound such as styrene, a vinyl cyanide compound such as acrylonitrile, an alkyl acrylate having a C₁ to C₅ alkyl group such as butyl acrylate, and other vinyl monomers. These monomers may be used alone or in admixture thereof.

The butadiene rubber may be a crosslinked rubber or a non-crosslinked rubber. As a crosslinking monomer are used any of compounds having at least two polymerizable groups in the molecule known as a crosslinking agent. Examples thereof are, for instance, allyl methacrylate, divinyl benzene, diallyl phthalate, polyethylene glycol dimethacrylate, 1,3-butylene glycol dimethacrylate, ethylene glycol dimethacrylate, and the like. These may be used alone or in admixture thereof. The amount of the crosslinking agent is from 0 to 5 % by weight based on the total weight of the monomers used. If the amount exceeds 5 % by weight, the rubber becomes hard to result in lowering of the impact resistance.

The graft copolymer of the present invention is obtained by adding and polymerizing a monomer component comprising 50 to 100 % by weight of methyl methacrylate and 50 to 0 % by weight of other vinyl monomer copolymerizable therewith in a single or multi stage in the presence of the above-mentioned butadiene rubber in the form of a latex, while remarkably increasing the particle size by using a water-soluble electrolyte. The graft polymerization is carried out according to a usual method.

The amount of the butadiene rubber latex is from 30 to 95 parts by weight, preferably 65 to 85 parts, on the solid basis based on 100 parts by weight of the total of the solid matter of the latex (butadiene rubber) and the monomer component. If the amount of the rubber is less than 30 parts by weight, the effect of improving the impact resistance of vinyl chloride resins is small. If the amount of the rubber is more than 95 parts by weight, no powdery resin is obtained since the graft copolymer aggregates to a mass at the time of coagulation and recovery from the latex.

Examples of the vinyl monomer copolymerizable with methyl methacrylate used in the preparation of the graft copolymer are, for instance, an aromatic vinyl monomer such as styrene or styrene derivatives (e.g., α-methylstyrene and chlorostyrene); a vinyl cyanide monomer such as acrylonitrile or methacrylonitrile; an alkyl acrylate having a C₁ to C₁₂ alkyl group, especially a C₁ to C₅ alkyl group, such as ethyl acrylate or butyl acrylate; an alkyl methacrylate other than methyl methacrylate; and the like. These monomers may be used alone or in admixture thereof.

The water-soluble electrolyte is used for the purpose of agglomerating the rubber particles to enhance the particle size during the graft polymerization. The water-soluble electrolyte includes, for instance, compounds which dissociate into an ion such as Na⁺, K⁺, Mg²⁺, Al³⁺ or H⁺ and an ion such as Cl⁻, Br⁻, SO₄²⁻, SO₃²⁻, NO₂⁻, NO₃⁻, PO₄³⁻, CO₃²⁻ or OH⁻. Neutral electrolytes such as inorganic acid salts which can maintain the polymerization system neutral even if added to the system, are preferred rather than electrolytes such as inorganic and organic acids, since the effects of the present invention is marked. Examples of such electrolytes are, for instance, NaCl, KCl, Na₂SO₄, CaCl₂, AlCl₃ and the like. The amount of the electrolyte is preferably from 0.5 to 5 parts by weight per 100 parts by weight of the total of the butadiene rubber and the graft monomer component. If the amount of electrolyte is less than 0.5 part by weight, agglomeration to enhance the particle size is hard to occur, and if the amount is more than 5 parts by weight, the latex falls short of stability to result in increase of scale. The electrolyte is added to the polymerization system usually prior to starting the graft polymerization and, thereafter, the polymerization is promptly started. By such a procedure, the graft polymerization proceeds while the polymer particles are agglomerated to increase the particle size.

By conducting the graft polymerization under the above-mentioned conditions, agglomeration of polymer particles occurs during the graft polymerization, thus giving a graft copolymer having an enhanced particle size. The agglomeration to enhance the particle size is carried out so as to achieve a b/a ratio of at least 2.9, preferably at least 3.5, more preferably at least 4, wherein "a" is the average particle size of butadiene rubber particles and "b" is the average particle size of the graft copolymer. If the b/a ratio is less than 2.9, the degree of improvement in impact resistance does not exceed a level of conventional impact modifiers. The impact resistance-imparting effect of the graft copolymer is drastically enhanced when the b/a ratio is 2.9 or more. The b/a ratio of at least 2.9 can be achieved by making the average particle size "a" of a latex of a rubber prior to the agglomeration small, by making the average particle size "b" of the graft copolymer to be produced large, or by applying a combination of these manners. A problem of generation of polymerization scale may arise if the value "b" is increased to 0.2 µm or more. Although the average particle size "a" of a butadiene rubber obtained by a general method is usually 0.07 µm or more, it is preferable to decrease the average particle size "a" to not more than 0.065 µm, especially not more than 0.060 µm, more especially not more than 0.055 µm, in such a manner as increasing the amount of emulsifier or the amount of polymerization initiator. The average particle sizes of the butadiene rubber and the obtained graft copolymer are measured as a volume average particle size by a dynamic light scattering method.

The graft copolymer latex obtained in a manner as mentioned above is coagulated by adding an acid and/or a salt thereto, heat-treated, washed, dehydrated and dried to give a powdery graft copolymer. The thermoplastic resin composition of the present invention is obtained by incorporating 1 to 30 parts by weight of the powdery graft copolymer into 99 to 70 parts by weight of a thermoplastic resin such as a vinyl chloride resin (the total thereof being 100 parts by weight), and is used for molding and the like. The resin composition of the present invention may contain, as occasion demands, usual additives such as stabilizer, filler, lubricant, plasticizer, coloring agent and others.

The thermoplastic resins used in the present invention include, for instance, vinyl chloride resins, acrylic resins, styrene resins, carbonate resins, amide resins, ester resins, olefin resins and the like. Examples of the vinyl resins are polyvinyl chloride, copolymers of at least 50 % by weight of vinyl chloride and a monomer copolymerizable therewith such as vinyl acetate or ethylene, chlorinated polyvinyl chloride, and the like. Examples of the acrylic resins are polymethyl methacrylate, copolymers of at least 50 % by weight of methyl methacrylate and a monomer copolymerizable therewith such as methyl acrylate, butyl acrylate or styrene, and the like. Examples of the styrene resins are polystyrene, styrene-acrylonitrile copolymer, α-methylstyrene-acrylonitrile copolymer, styrene-maleimide copolymer, styrene-α-methylstyrene-acrylonitrile copolymer, styrene-α-methylstyrene-maleimde-acrylonitrile copolymer, styrene-maleic anhydride copolymer, and the like. Examples of the carbonate resins are bisphenol-based polycarbonate, aliphatic polycarbonate, and the like. Examples of the amide resins are nylon 6, nylon 66, nylon 12, and the like. Examples of the ester resins are polyethylene terephthalate, polybutylene phthalate, and the like. Examples of the olefin resins are polypropylene, polyethylene, cyclic polyolefins, and the like.

The present invention is more specifically explained by means of examples wherein all parts and % are by weight unless otherwise noted. It is to be understood that the present invention is not limited to these examples.

### EXAMPLE 1

After mixing 200 parts of water, 1.8 parts of sodium oleate, 0.4 part of potassium tertiary phosphate, 0.2 part of sodium β-naphthalene sulfonate formaldehyde condensate and 100 parts of butadiene, the temperature was elevated to 40°C. Thereto were added 0.002 part of ferrous sulfate (FeSO₄·7H₂O), 0.005 part of disodium ethylenediaminetetraacetate, 0.2 part of sodium formaldehyde sulfoxylate and 1.0 part of paramenthane hydroperoxide, and the polymerization was carried out for 20 hours to give a rubber latex (R-1) having an average particle size of 0.07 µm.

After mixing 70 parts (solid matter) of the rubber latex (R-1) with 200 parts of water and 1.5 parts (solid matter) of a 10 % aqueous solution of Na₂SO₄ and then elevating the temperature to 60°C, thereto were added 0.001 part of ferrous sulfate, 0.004 part of disodium ethylenediaminetetraacetate and 0.2 part of sodium formaldehyde sulfoxylate. Subsequently a mixture of 20 parts of methyl methacrylate, 5 parts of styrene, 5 parts of butyl acrylate and 0.1 part of cumene hydroperoxide was continuously added over 4 hours. The polymerization was further continued for 1 hour to give a latex (G-1) of a graft copolymer having an average particle size of 0.23 µm.

The graft copolymer latex (G-1) was coagulated with hydrochloric acid, heat-treated, dehydrated and dried to give a powdery graft copolymer (A-1).

Next, 100 parts of a polyvinyl chloride having a degree of polymerization of 700 (trade mark KANE VINYL S1007, made by KANEKA CORPORATION) was blended with 10 parts of the powdery graft copolymer (A-1), 2.0 parts of octyl tin mercaptide, 0.5 part of glycerol ricinoleate and 0.2 part of montanic acid ester. The mixture was kneaded by rolls at 170°C for 5 minutes and heat-pressed at 180°C for 15 minutes to give Izod impact test specimens having a thickness of 6 mm. The Izod impact strength was measured according to JIS K 7110. The result is shown in Table 1.

### EXAMPLE 2

After mixing 600 parts of water, 4.0 parts of sodium oleate, 0.4 part of potassium tertiary phosphate, 0.2 part of sodium β-naphthalene sulfonate formaldehyde condensate and 100 parts of butadiene, the temperature was elevated to 40°C. Thereto were added 0.002 part of ferrous sulfate (FeSO₄·7H₂O), 0.005 part of disodium ethylenediaminetetraacetate, 0.2 part of sodium formaldehyde sulfoxylate and 1.0 part of paramenthane hydroperoxide, and the polymerization was carried out for 12 hours to give a rubber latex (R-2) having an average particle size of 0.05 µm.

After mixing 70 parts (solid matter) of the rubber latex (R-2) with 200 parts of water and 4.8 parts (solid matter) of a 10 % aqueous solution of Na₂SO₄ and then elevating the temperature to 60°C, thereto were added 0.001 part of ferrous sulfate, 0.004 part of disodium ethylenediaminetetraacetate and 0.2 part of sodium formaldehyde sulfoxylate. Subsequently a mixture of 20 parts of methyl methacrylate, 5 parts of styrene, 5 parts of butyl acrylate and 0.1 part of cumene hydroperoxide was continuously added over 4 hours. The polymerization was further continued for 1 hour to give a latex (G-2) of a graft copolymer having an average particle size of 0.15 µm. Evaluation of Izod impact strength was conducted in the same manner as in Example 1. The result is shown in Table 1.

### EXAMPLE 3

After mixing 70 parts (solid matter) of the rubber latex (R-2) with 300 parts of water and 5.5 parts (solid matter) of a 10 % aqueous solution of Na₂SO₄ and then elevating the temperature to 60°C, thereto were added 0.001 part of ferrous sulfate, 0.004 part of disodium ethylenediaminetetraacetate and 0.2 part of sodium formaldehyde sulfoxylate. Subsequently a mixture of 20 parts of methyl methacrylate, 5 parts of styrene, 5 parts of butyl acrylate and 0.1 part of cumene hydroperoxide was continuously added over 4 hours. The polymerization was further continued for 1 hour to give a latex (G-3) of a graft copolymer having an average particle size of 0.18 µm. Evaluation of Izod impact strength was conducted in the same manner as in Example 1. The result is shown in Table 1.

### EXAMPLE 4

After mixing 70 parts (solid matter) of the rubber latex (R-2) with 300 parts of water and 6.5 parts (solid matter) of a 10 % aqueous solution of Na₂SO₄ and then elevating the temperature to 60°C, thereto were added 0.001 part of ferrous sulfate, 0.004 part of disodium ethylenediaminetetraacetate and 0.2 part of sodium formaldehyde sulfoxylate. Subsequently a mixture of 20 parts of methyl methacrylate, 5 parts of styrene, 5 parts of butyl acrylate and 0.1 part of cumene hydroperoxide was continuously added over 4 hours. The polymerization was further continued for 1 hour to give a latex (G-4) of a graft copolymer having an average particle size of 0.21 µm. Evaluation of Izod impact strength was conducted in the same manner as in Example 1. The result is shown in Table 1.

### COMPARATIVE EXAMPLE 1

After mixing 70 parts (solid matter) of the rubber latex (R-1) with 200 parts of water and 0.8 part (solid matter) of a 10 % aqueous solution of Na₂SO₄ and then elevating the temperature to 60°C, thereto were added 0.001 part of ferrous sulfate, 0.004 part of disodium ethylenediaminetetraacetate and 0.2 part of sodium formaldehyde sulfoxylate. Subsequently a mixture of 20 parts of methyl methacrylate, 5 parts of styrene, 5 parts of butyl acrylate and 0.1 part of cumene hydroperoxide was continuously added over 4 hours. The polymerization was further continued for 1 hour to give a latex (G-11) of a graft copolymer having an average particle size of 0.10 µm. Evaluation of Izod impact strength was conducted in the same manner as in Example 1. The result is shown in Table 1.

### COMPARATIVE EXAMPLE 2

After mixing 70 parts (solid matter) of the rubber latex (R-1) with 200 parts of water and 1.2 part (solid matter) of a 10 % aqueous solution of Na₂SO₄ and then elevating the temperature to 60°C, thereto were added 0.001 part of ferrous sulfate, 0.004 part of disodium ethylenediaminetetraacetate and 0.2 part of sodium formaldehyde sulfoxylate. Subsequently a mixture of 20 parts of methyl methacrylate, 5 parts of styrene, 5 parts of butyl acrylate and 0.1 part of cumene hydroperoxide was continuously added over 4 hours. The polymerization was further continued for 1 hour to give a latex (G-12) of a graft copolymer having an average particle size of 0.18 µm. Evaluation of Izod impact strength was conducted in the same manner as in Example 1. The result is shown in Table 1.

### COMPARATIVE EXAMPLE 3

After mixing 70 parts (solid matter) of the rubber latex (R-2) with 300 parts of water and 2.5 parts (solid matter) of a 10 % aqueous solution of Na₂SO₄ and then elevating the temperature to 60°C, thereto were added 0.001 part of ferrous sulfate, 0.004 part of disodium ethylenediaminetetraacetate and 0.2 part of sodium formaldehyde sulfoxylate. Subsequently a mixture of 20 parts of methyl methacrylate, 5 parts of styrene, 5 parts of butyl acrylate and 0.1 part of cumene hydroperoxide was continuously added over 4 hours. The polymerization was further continued for 1 hour to give a latex (G-13) of a graft copolymer having an average particle size of 0.09 µm. Evaluation of Izod impact strength was conducted in the same manner as in Example 1. The result is shown in Table 1.

### COMPARATIVE EXAMPLE 4

After mixing 70 parts (solid matter) of the rubber latex (R-2) with 300 parts of water and 3.8 parts (solid matter) of a 10 % aqueous solution of Na₂SO₄ and then elevating the temperature to 60°C, thereto were added 0.001 part of ferrous sulfate, 0.004 part of disodium ethylenediaminetetraacetate and 0.2 part of sodium formaldehyde sulfoxylate. Subsequently a mixture of 20 parts of methyl methacrylate, 5 parts of styrene, 5 parts of butyl acrylate and 0.1 part of cumene hydroperoxide was continuously added over 4 hours. The polymerization was further continued for 1 hour to give a latex (G-14) of a graft copolymer having an average particle size of 0.13 µm. Evaluation of Izod impact strength was conducted in the same manner as in Example 1. The result is shown in Table 1.

### COMPARATIVE EXAMPLE 5

After mixing 200 parts of water, 1.2 parts of sodium oleate, 0.4 part of potassium tertiary phosphate, 0.2 part of sodium β-naphthalene sulfonate formaldehyde condensate and 100 parts of butadiene, the temperature was elevated to 40°C. Thereto were added 0.002 part of ferrous sulfate, 0.005 part of disodium ethylenediaminetetraacetate, 0.2 part of sodium formaldehyde sulfoxylate and 1.0 part of paramenthane hydroperoxide, and the polymerization was carried out for 25 hours to give a rubber latex (R-3) having an average particle size of 0.1 µm.

After mixing 70 parts (solid matter) of the rubber latex (R-3) with 200 parts of water and 1.5 parts (solid matter) of a 10 % aqueous solution of Na₂SO₄ and then elevating the temperature to 60°C, thereto were added 0.001 part of ferrous sulfate, 0.004 part of disodium ethylenediaminetetraacetate and 0.2 part of sodium formaldehyde sulfoxylate. Subsequently a mixture of 20 parts of methyl methacrylate, 5 parts of styrene, 5 parts of butyl acrylate and 0.1 part of cumene hydroperoxide was continuously added over 4 hours. The polymerization was further continued for 1 hour to give a latex (G-15) of a graft copolymer having an average particle size of 0.18 µm. Evaluation of Izod impact strength was conducted in the same manner as in Example 1. The result is shown in Table 1.

**Table 1**

| | Particle size "a" of rubber (µm) | Particle size "b" of graft copolymer (µm) | Electrolyte | b/a | Izod impact strength (J/m) |
|---|---|---|---|---|---|
| Example 1 | 0.07 | 0.23 | Na₂SO₄ | 3.29 | 300 |
| Example 2 | 0.05 | 0.15 | Na₂SO₄ | 3.00 | 330 |
| Example 3 | 0.05 | 0.18 | Na₂SO₄ | 3.60 | 410 |
| Example 4 | 0.05 | 0.21 | Na₂SO₄ | 4.20 | 610 |
| Com. Ex. 1 | 0.07 | 0.10 | Na₂SO₄ | 1.42 | 100 |
| Com. Ex. 2 | 0.07 | 0.18 | Na₂SO₄ | 2.57 | 150 |
| Com. Ex. 3 | 0.05 | 0.09 | Na₂SO₄ | 1.80 | 100 |
| Com. Ex. 4 | 0.05 | 0.13 | Na₂SO₄ | 2.60 | 140 |
| Com. Ex. 5 | 0.10 | 0.18 | Na₂SO₄ | 1.80 | 120 |

From the results of Example 3 and Comparative Example 2, it would be understood that the impact resistance-imparting effect of graft copolymers is drastically enhanced by adjusting the b/a ratio to 2.9 or more, even if the average particle sizes of the graft copolymers are the same.

### INDUSTRIAL APPLICABILITY

Graft copolymers that the b/a ratio has been adjusted to at least 2.9 by applying a particle size enhancement technique using electrolytes have an remarkably improved impact resistance-imparting effect as compared with conventional impact modifiers, and the resin compositions of the present invention comprising such graft copolymers and thermoplastic resins provide molded articles having an excellent impact resistance.

## Claims

1. A thermoplastic resin composition comprising (A) 1 to 30 parts by weight of a graft copolymer obtained by polymerizing 70 to 5 parts by weight of a monomer component comprising 50 to 100 % by weight of methyl methacrylate and 50 to 0 % by weight of other vinyl monomer copolymerizable therewith in the presence of 30 to 95 parts by weight (solid basis) of a latex of a butadiene rubber, wherein the polymer particles in the polymerization system are agglomerated by using a water-soluble electrolyte to enhance the particle size so that the b/a ratio of the average particle size "b" of the graft copolymer to the average particle size "a" of the butadiene rubber latex is at least 2.9, and (B) 99 to 70 parts by weight of a thermoplastic resin, the total of (A) and (B) being 100 parts by weight.

2. The composition of Claim 1, wherein said thermoplastic resin is a vinyl chloride resin containing at least 50 % by weight of vinyl chloride.

3. The composition of Claim 1, wherein the b/a ratio is at least 3.5.

4. The composition of Claim 1, wherein the b/a ratio is at least 4.

5. The composition of Claim 1, wherein said latex of a butadiene rubber has an average particle size "a" of not more than 0.065 µm.

6. The composition of Claim 1, wherein said latex of a butadiene rubber has an average particle size "a" of not more than 0.060 µm.

7. The composition of Claim 1, wherein said latex of a butadiene rubber has an average particle size "a" of not more than 0.055 µm.
